Europäisches Patentamt

European Patent Office

Office européen des brevets

(19)

(11) Publication number: **0 026 534**
**B1**

(12) **EUROPEAN PATENT SPECIFICATION**

(45) Date of publication of patent specification: **20.04.83**

(51) Int. Cl.³: **F 16 G 5/16**

(21) Application number: **80200890.4**

(22) Date of filing: **23.09.80**

(54) **A V-belt provided with a plurality of substantially non-deformable transverse elements.**

(30) Priority: **27.09.79 NL 7907181**

(43) Date of publication of application:
**08.04.81 Bulletin 81/14**

(45) Publication of the grant of the patent:
**20.04.83 Bulletin 83/16**

(84) Designated Contracting States:
**AT BE CH DE FR GB IT LI LU NL SE**

(56) References cited:
**DE - A - 1 960 350**
**DE - A - 2 414 989**
**DE - A - 2 643 528**
**US - A - 4 080 841**

(73) Proprietor: **Van Doorne's Transmissie B.V.**
**Dr. Hub van Doorneweg 120 Postbus 500**
**NL-5026 RA Tilburg (NL)**

(72) Inventor: **Hendriks, Emerie Frederik Marie**
**De Zadelmaker 4**
**NL-Heeze (NL)**
Inventor: **Cadee, Theodorus Petrus Maria**
**Past de Beeckstraat 11**
**NL-Goirle (NL)**

(74) Representative: **Louet Feisser, Arnold Abraham**
**Alfred**
**Postbus 500**
**NL-5000 AM Tilburg (NL)**

Courier Press, Leamington Spa, England

A V-belt provided with a plurality of substantially non-deformable transverse elements

The invention relates to a V-belt provided with a plurality of substantially non-deformable transverse elements which are slideably arranged on an endless carrier, said carrier comprising one or more sets of endless bands. Such a V-belt is described for instance in US—A—4 080 841.

Such a V-belt, having a trapezium-shaped cross section, may be used for the transmission of a relatively large torque between two V-shaped pulleys, the conical discs of which have a mutually variable distance in order to achieve a transmission with a stepless variable transmission ratio. The transverse elements are thereby of relatively non-deformable material, such as metal. Also the carrier may consist of metal endless bands.

Since the transverse elements are arranged slidably on the carrier, i.e. with some clearance, the transverse elements have a slight sliding possibility in transverse direction, both relative to the carrier and relative to each other. If the transverse elements, during operation, make impact with the carrier, the carrier or the transverse element may be damaged thereby.

It is the object of the present invention to provide a certain mutual coupling of the transverse elements and likewise preventing the endless bands of the carrier from being damaged.

To this effect the V-belt according to the invention is characterized by intermediate elements arranged between the flanks of the endless bands (the side of the carrier) and the transverse elements, each intermediate element extending over more than one transverse element. As a result the sides of the endless bands of the carrier cannot contact the transverse elements. They can, however, run against the intermediate elements, which is not inconvenient since these elements have a large and flat surface for this purpose. Moreover, the intermediate elements effect a mutual coupling between the transverse elements for avoiding a lateral displacement of the transverse elements. This is a result of the fact that the intermediate elements have a greater length than the thickness of the transverse elements so that the intermediate elements extend over more than one transverse element. Preferably, the intermediate elements according to the invention have therefor a greater length than twice the thickness of one transverse element.

In a preferred embodiment each intermediate element according to the invention consists of a substantially rectangular plate having a convexly curved side, in order to enable the bending of the V-belt.

According to a further feature of the invention the intermediate elements extend in recesses of the transverse elements disposed longitudinally to the V-belt, which enhances the guidance of the intermediate elements and the mutual coupling of the transverse elements.

Some embodiments of the invention will now be described, by way of example, with reference to the accompanying drawing, wherein:

Fig. 1 diagrammatically shows a cross section of the two pulleys on which a V-belt runs;

Fig. 2 shows a transverse element adapted for application on a carrier, consisting of one band or set of bands;

Fig. 3 shows two of such transverse elements in side view; and

Fig. 4 and 5 show a transverse element adapted for application on a carrier comprising two bands or sets of bands.

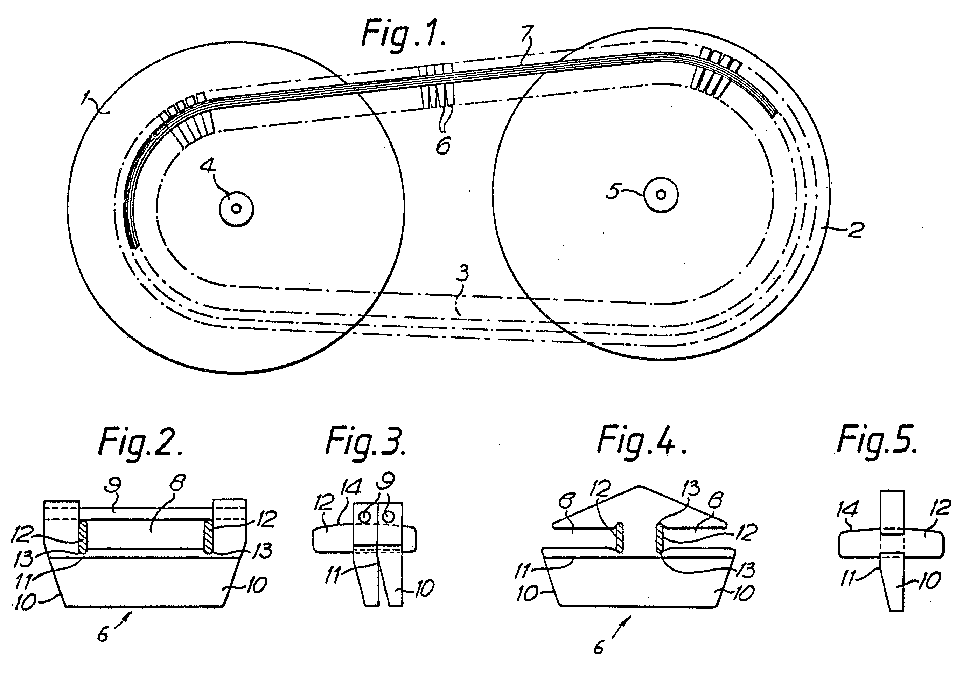

Fig. 1 diagrammatically shows two V-shaped pulleys 1, 2. The running diameter of the V-belt 3 on the pulleys 1, 2 may be varied by control of the mutual distance of the conical disks of the pulleys 1, 2.

The ratio between the rotation speeds of the diagrammatically shown shafts 4 and 5 may thus be controlled stepless. The V-belt 3 comprises a plurality of transverse elements 6 which are arranged slidably on the endless carrier 7. The transverse elements 6 are slightly tapered inwardly, so that the V-belt can bend in one direction, whereby the transverse elements 6 can find support against each other through a roll-off zone or tilting line. On carrier 7 there is applied such a number of transverse elements 6 that these fill up at least substantially the entire length of the V-belt.

The transverse elements 6 are made of substantially non-deformable material. The carrier 7 is formed for instance by one or two sets of endless metal bands.

Fig. 2 shows a transverse element 6 provided with a recess 8 for receiving the carrier, e.g. a set of bands. A metal pin 9 prevents the transverse element from falling off the carrier and is applied after the transverse element has been placed on the carrier. The transverse element is fitted with two oblique faces 10 which come into contact with the conical disks of the pulleys. The transverse element is tapered downwardly (in Fig. 2) from a roll-off zone or tilting line 11, so that abutting transverse elements can be slightly tilt relative to each other in order to enable the bending of the V-belt.

Furthermore, there are provided intermediate elements 12 which form an intermediary between the sides of the carrier which is disposed in recess 8 and the transverse element. The intermediate elements 12 engage at their bottom side in grooves 13 of the transverse element. Since the intermediate elements 12 extend over a plurality of transverse elements, a mutual displacement of the transverse elements in transverse direction of the V-belt is avoided, at least restricted.

Fig. 3 shows a side view of two transverse elements according to Fig. 2, wherein identical reference numerals are used. Since the top side 14 of the intermediate elements 12 is convexly curved, the transverse elements may tilt relative to each other about the tilting line 11 without this being impeded in that the pin 9 touches the intermediate element 12. It furthermore appears from Fig. 3 that the intermediate element 12 has such a length that it extends over a plurality of transverse elements.

Fig. 4 and 5 shown another type of transverse elements that is suitable for application on a carrier which comprises two sets of endless bands. To this effect, two lateral recesses 8 are present.

In Fig. 4 and 5 the same reference numerals are used for corresponding parts as in Fig. 2 and 3. The intermediate elements 12 engage in this embodiment both the bottom and the top in grooves 13 of the transverse element.

Each intermediate element 12 may be fixedly connected to or clampingly disposed in one transverse element and extend slideably in other transverse elements. It is also possible to apply the intermediate elements 12 with little or more clearance.

## Claims

1. A V-belt (3) provided with a plurality of substantially non-deformable transverse elements (6) which are arranged slidably on an endless carrier (7), said carrier comprising one or more sets of endless bands, characterized by intermediate elements (12) arranged between the flanks of the endless bands of the carrier (7) and the transverse elements (6), each intermediate element (12) extending over more than one transverse element (6).

2. A V-belt according to claim 1, characterized in that the intermediate elements (12) extend over more than two transverse elements (6).

3. A V-belt according to claim 1 or 2, characterized in that each intermediate element (12) consists of a substantially rectangular plate having a convexly curved side (14).

4. A V-belt according to any one of the preceding claims, characterized in that the intermediate elements (12) extend in recesses (8) of the transverse elements (6) disposed in longitudinal direction to the V-belt (3).

## Revendications

1. Courroie trapézoïdale (3) munie de plusieurs éléments transversaux (6) pratiquement indéformables qui sont disposés de manière coulissante sur un organe porteur (7) sans fin, ledit organe porteur comprenant un ou plusieurs ensembles de bandes sans fin, caractérisée par des éléments intermédiaires (12) disposés entre les flancs des bandes sans fin de l'organe porteur (7) et les éléments transversaux (6), chaque élément intermédiaire (12) s'étendant sur plus d'un élément transversal (6).

2. Courroie trapézoïdale selon la revendication 1, caractérisée en ce que les éléments intermédiaires (12) s'étendent sur plus de deux éléments transversaux (6).

3. Courroie trapézoïdale selon la revendication 1 ou 2, caractérisée en ce que chaque élément intermédiaire (12) consiste en une plaque sensiblement rectangulaire ayant un côté incurvé de manière convexe (14).

4. Courroie trapézoïdale selon l'une quelconque des revendications précédentes, caractérisée en ce que les éléments intermédiaires (12) s'étendent dans des évidements (8) des éléments transversaux (6) disposés suivant la direction longitudinale de la courroie trapézoïdale (3).

## Patentansprüche

1. Keilriemen (3) mit einer Vielzahl von im wesentlichen unverformbaren Querelementen (6), die verschiebbar auf einem endlosen Träger (7) angeordnet sind, der einen oder mehrere Sätze endloser Bänder aufweist, gekennzeichnet durch Zwischenelemente (12), die zwischen den Flanken der endlosen Bänder des Trägers (7) und den Querelementen (6) angeordnet sind, wobei jedes Zwischenelement (12) sich über mehr als ein Querelement (6) erstreckt.

2. Keilriemen nach Anspruch 1, dadurch gekennzeichnet, dass die Zwischenelemente (12) sich über mehr als zwei Querelemente (6) erstrecken.

3. Keilriemen nach Anspruch 1 oder 2, dadurch gekennzeichnet, dass jedes Zwischenelement (12) aus einer im wesentlichen rechteckigen Platte besteht, die eine konvex gekrümmte Seite (14) hat.

4. Keilriemen nach einem der vorangehenden Ansprüche, dadurch gekennzeichnet, dass die Zwischenelemente (12) sich in Aussparungen (8) der Querelemente (6) erstrecken, die in Längsrichtung des Keilriemens (3) angeordnet sind.

Fig.1.

Fig.2.

Fig.3.

Fig.4.

Fig.5.

0026 534